# EUROPÄISCHE PATENTSCHRIFT

(11) **EP 1 347 221 B1**
(45) Veröffentlichungstag und Bekanntmachung des Hinweises auf die Patenterteilung: **17.08.2005**
(21) Anmeldenummer: 02006576.9
(22) Anmeldetag: 21.03.2002
(51) Int. Cl.: F16K 3/02

(54) **Absperrschieber mit Auflagedichtung**
Gate valve with support sealing
Tiroir avec support de joint d'étanchéité

(43) Veröffentlichungstag der Anmeldung: 24.09.2003
(73) Patentinhaber: Hawle Armaturen GmbH, 83395 Freilassing (DE)
(72) Erfinder: Götzinger, Stefan, 83404 Ainring (DE)
(74) Vertreter: Schwabe - Sandmair - Marx

(56) Entgegenhaltungen:
- EP-A- 0 116 805
- DE-A- 19 815 415
- GB-A- 2 256 260
- US-A- 5 653 423

## Beschreibung

Die Erfindung betrifft einen Absperrschieber für Druckrohrleitungen mit einer Spindel, mittels der eine Dichtscheibe in einen Absperrgehäuseabschnitt des Schiebers in den Strömungsweg eingefahren wird, sowie eine Dichtung für den Absperrschieber.

In letzter Zeit finden Druckrohrleitungen verbreitete Anwendung und zwar auch beispielsweise als Abwasserleitungen, die heute noch in großem Maße als sogenannte "Freispiegelleitungen" gebaut werden, in denen das Abwasser drucklos mit gleichmäßigem Gefälle durch die Schwerkraft zur Kläranlage hin bewegt wird. Die angesprochenen Druckrohrleitungen werden solchen Freispiegelleitungen nunmehr vorgezogen, da sie nicht mit einem gleichmäßigen Gefälle verlegt werden müssen und kleinere Querschnitte gewählt werden können. Für solche Druckrohrleitungen werden Armaturen benötigt, beispielsweise Entlüflungsarmaturen, aber auch Absperrschieber, um bestimmte Streckenabschnitte zuverlässig absperren zu können.

Ein der vorliegenden Erfindung gattungsgemäß entsprechender Absperrschieber ist ein sogenannter Plattenschieber, der in der Regel zwischen Flanschen einer Rohrleitung eingebaut wird. Diese Schieber sind wegen der Flanschbauweise und der offenliegenden Spindel für den Erdeinbau nicht geeignet; der Einbau in Schächten stellt jedoch eine relativ teure Lösung dar.

Aus der DE-U-19 36 301 ist ein gattungsgemäßer Absperrschieber bekannt, der eine zweiteilige Dichtung aufweist, welche eine Dichtscheibe, wenn sie in den Strömungsweg eingefahren ist, beidseitig umlaufend abdichtet. Der Nachteil solcher Absperrschieber besteht darin, dass der Abdichtmechanismus verschmutzungsanfällig ist. Durch das Eintauchen der Dichtscheibe zwischen die Dichtringe einer zweiteiligen Dichtung wird bei jedem Schließvorgang eine kleine Menge Schmutz (zum Beispiel Sand oder andere feinkörnige Partikel) in den Bereich unterhalb der Dichtung gedrückt. Im Laufe der Zeit sammelt sich so eine beträchtliche Schmutzmenge an, die zu Funktionsproblemen führen kann. Die GB 2 256 260 beschreibt einen Absperrschieber und eine Dichtung gemäß dem Oberbegriff der Ansprüche 1 und 12.

Vor diesem Hintergrund hat es sich die vorliegende Erfindung zur Aufgabe gemacht, einen Absperrschieber für Druckrohrleitungen bereitzustellen, der die vorgenannten Nachteile des Standes der Technik überwindet. Insbesondere soll ein für den Erdeinbau geeigneter Absperrschieber bereitgestellt werden, der eine ausreichende Betriebssicherheit bereitstellt.

Diese Aufgabe wird erfindungsgemäß durch einen Absperrschieber mit den Merkmalen des Patentanspruchs 1 und eine Dichtung mit den Merkmalen des Patentanspruchs 12, insbesondere mit den Merkmalen des kennzeichnenden Teils dieser Ansprüche gelöst. Die Unteransprüche beschreiben bevorzugte Ausführungsformen der Erfindung.

Die Vorteile des erfindungsgemäßen Absperrschiebers beruhen darauf, dass die Dichtvorrichtung eine Dichtung aufweist, deren Oberteil aus zwei Ringdichtungsabschnitten besteht und an deren Unterteil die beiden Ringdichtungsabschnitte zu einem gemeinsamen Auf- bzw. Anlageabschnitt für den unteren Abschnitt der Dichtscheibe zusammenlaufen.

Mit anderen Worten wird durch die erfindungsgemäße Ausgestaltung dafür gesorgt, dass die Dichtscheibe im unteren Dichtungsabschnitt nicht mehr zwischen zwei Dichtungshälften eindringt, sondern auf eine durch das Unterteil gebildete Anstoßfläche in dichtendem Stoß anstößt. Es kann somit vermieden werden, dass Schmutzpartikel im unteren Teil der Dichtung dauerhaft eingefangen werden und über die Betriebsdauer zu Funktions- und Dichtigkeitsstörungen führen. Ein weiterer Vorteil ist darin zu sehen, dass beim Schließvorgang eingeklemmte Fremdkörper (Gewebefetzen o. ä.) beim nächsten Öffnen des Schiebers wieder freigegeben werden. Der Absperrschieber gemäß der Erfindung kann deshalb ohne weiteres auch im Erdeinbau sehr zuverlässig und mit guter dauerhafter Betriebssicherheit arbeiten.

Gemäß der Erfindung ist die Dichtung insgesamt einteilig aufgebaut, d.h. das zusammenlaufende Unterteil verbindet die Oberteilabschnitte zu einer integralen Einheit. Die insgesamt einteilige Ausführung bringt noch den Vorteil mit sich, dass keinerlei Spalten entstehen, in denen sich Fremdkörper verklemmen können.

Um eine vorteilhafte Abdichtung zu erzielen kann das Oberteil der Dichtung mit den Ringdichtungsabschnitten etwa zwei Drittel der vertikalen Länge und das Unterteil mit dem Auf- bzw. Anlageabschnitt etwa ein Drittel der vertikalen Länge der Dichtung einnehmen.

Bei einer Ausführungsform der vorliegenden Erfindung weist die Dichtvorrichtung zwei aneinander liegende und aneinander abdichtende, ringförmige Einsätze auf, die im Absperrgehäuseabschnitt gehalten werden, wobei die Dichtscheibe zwischen den Einsätzen in den Strömungsweg eingefahren wird. Die Einsätze können dabei an der Kontaktfläche zum Absperrgehäuseabschnitt mit Ringdichtungen abgedichtet sein, insbesondere mit O-Ringen, die in Aufnahmen der Einsätze gelagert sind.

Ein solcher Aufbau macht es möglich, dass die Einsätze bei offenem Strömungsweg, also herausgefahrener Dichtscheibe, den Strömungsweg so abdichten, dass keinerlei Strömungsmedium in tote Gebiete des Gehäuses eindringt. Andererseits findet auch bei in den Strömungsweg eingefahrener Dichtscheibe sowohl eine völlige Absperrung der Strömung als auch eine völlige Abdichtung aller nicht dem Strömungsweg zugehörigen Armaturenteile statt. Damit entstehen keine Bereiche innerhalb des Absperrschiebers, die mit ruhendem und nicht abführbarem Strömungsmedium gefüllt sind, was einerseits die Betriebssicherheit der im Gehäuse vorhandenen Teile erhöht und andererseits die Gefahr der Totwasserbereichsbildung bei flüssigen Medien vollständig eliminiert.

Bei der Verwendung von O-Ringprofilen kann die Stärke der Dichtscheibe gegenüber herkömmlichen glatten Schiebern deutlich verringert werden.

Die Einsätze können im unteren Bereich Ausnehmungen zur Aufnahme des Auf- bzw. Anlageabschnittes aufweisen.

Gemäß einer weiteren Ausführungsform der vorliegenden Erfindung ist die Spindel des Absperrschiebers so vorgesehen, dass sie sich von einer oberen, abgedichteten Lagerstelle im Spindelgehäuse durch eine untere Öffnung im Spindelgehäuse in den Absperrgehäuseabschnitt hinein bis knapp über die Dichtvorrichtung erstreckt. Wegen der Dichtvorrichtung kann demnach auch noch ein Teil des Absperrgehäuseabschnittes mit verwendet werden, um die Spindellänge unterzubringen, wodurch sich größere mögliche Verschiebelängen für die Dichtscheibe ergeben und damit auch die Möglichkeit, Rohre mit größeren Querschnitten abzusperren.

Im Absperrgehäuseabschnitt wird vorteilhafterweise ein Anschlag für die Spindelmutter vorgesehen, der die Eintauchtiefe der Dichtscheibe in die Dichtung begrenzt, um eine Beschädigung der Dichtung durch zu hohe Auflagekräfte an der Unterkante der Dichtscheibe zu vermeiden.

Der Absperrgehäuseabschnitt kann gemäß einer bevorzugten Ausführungsform der vorliegenden Erfindung im Einfahrbereich der Dichtscheibe eine lösbare und abdichtbare Verbindung zum Spindelgehäuse aufweisen, insbesondere in Form eines zum Spindelgehäuse hin offenen Kragens. Hierbei ist nun dafür gesorgt, dass das Spindelgehäuse grundsätzlich vom Absperrgehäuseabschnitt abgetrennt werden kann, und zwar auch in dem Zustand, wo der Strömungsweg bei hochgefahrener Dichtscheibe offen ist. Dies wird durch die Dichtvorrichtung ermöglicht, die den Strömungsweg in jedem Betriebszustand des Absperrschiebers vollständig abdichtet, wodurch das Auswechseln von allen oberhalb der Dichtvorrichtung vorhandenen Bauteilen, also zum Beispiel Spindel, Dichtscheibe, Spindelgehäuse mit Lager und Spindeldichtung bei vollem Betriebsdruck und ohne Unterbrechung der Strömung möglich ist. Auch bei geschlossenem Absperrschieber, also mit in den Strömungsweg eingefahrener Dichtscheibe, lassen sich alle Teile des Spindelgehäuses und die Spindel auswechseln, wenn diese aus ihrer Verbindung zur Dichtscheibe gelöst wird. Damit können auch in besonders kritischen Bereichen Wartungsarbeiten ohne Änderung des offenen oder geschlossenen Zustandes des Absperrschiebers durchgeführt werden.

Bei einer Ausführungsform des erfindungsgemäßen Absperrschiebers erstrecken sich von dem Absperrgehäuse weg zu beiden Seiten hin integral verbundene Rohrleitungsabschnitte, die mit dem Absperrgehäuse zusammen den Strömungsweg im Bereich des Schiebers ausbilden, wobei sie an ihren abragenden Enden Verbindungsmittel, insbesondere Bajonettverschlüsse zur Rohranbindung aufweisen.

Gemäß einer weiteren Ausführungsform des erfindungsgemäßen Absperrschiebers ist die Dichtvorrichtung durch eine Haltevorrichtung am Absperrgehäuseabschnitt befestigt. Insbesondere kann dies durch beidseitig in Aussparungen des Gehäuses eingreifende und die Oberseite der Dichtvorrichtung übergreifende Halteclips realisiert werden. Diese Haltevorrichtung spielt eine besondere Rolle im Zusammenhang mit der Möglichkeit, das Spindelgehäuse von dem Absperrgehäuseabschnitt abzunehmen. Wenn die Haltevorrichtung, also beispielsweise die Halteclips angebracht sind, kann das Spindelgehäuse ohne weiteres beispielsweise zu Wartungszwecken abgenommen werden, wobei keinerlei Gefahr mehr besteht, dass die Dichtvorrichtung unter dem Druck des Fluids aus ihrem Gehäusesitz herausrutscht.

Die erfindungsgemäße Dichtung für einen Absperrschieber, dessen Strömungsweg durch eine Dichtscheibe abgedichtet wird, wenn sie in den Strömungsweg eingefahren ist, ist dadurch gekennzeichnet, dass die Dichtung ein Oberteil aus zwei Ringdichtungsabschnitten und ein Unterteil aufweist, an dem die beiden Ringdichtungsabschnitte zu einem gemeinsamen Auf- bzw. Anlageabschnitt für den unteren Abschnitt der Dichtscheibe zusammenlaufen. Sie ist insgesamt einteilig aufgebaut, wobei bevorzugt das Oberteil der Dichtung mit den Ringdichtungsabschnitten etwa zwei Drittel der vertikalen Länge und das Unterteil mit dem Auf- bzw. Anlageabschnitt etwa ein Drittel der vertikalen Länge der Dichtung einnimmt. Auch für die erfindungsgemäße Dichtung selbst ergeben sich die oben schon aufgeführten Vorteile.

Die Erfindung betrifft ferner mehrere Verwendungen eines wie oben beschriebenen Absperrschiebers. Zum einen eignet sich der erfindungsgemäße Absperrschieber wegen seiner Fähigkeit zum Erdeinbau und der vollständigen Isolierung der Spindel von dem Strömungsmedium hervorragend als Absperrschieber für Abwasserrohrleitungen. Eine weitere Verwendung eines erfindungsgemäßen Absperrschiebers ist diejenige als Absperrschieber für Rohrleitungen für flüssige oder gasförmige, brennbare Medien (zum Beispiel Erdgasversorgungsleitungen), die zum einen durch die Mehrfachabdichtung eine höhere Leckagesicherheit bekommen und andererseits durch das unter Druck mögliche Auswechseln der oberen Bauteile eine entsprechende Betriebssicherheit erreichen können.

In weiterer Verwendung kann der erfindungsgemäße Absperrschieber als ein solcher für Wasserrohrleitungen, insbesondere Trinkwasserrohrleitungen vorteilhaft eingesetzt werden. Wie schon vorher angesprochen, gibt es beim erfindungsgemäßen Absperrschieber im Gegensatz zu den bisher im Trinkwasserbereich eingesetzten Absperrarmaturen keinen Totwasserbereich, selbst dann nicht, wenn das Wasser nur geringfügig ausgetauscht wird. Diese Totwasserbereiche haben für die Trinkwasserversorgung den Nachteil, dass sich hier sehr leicht mikrobiologische Keime bilden können, die dann unter Umständen nur noch durch entsprechende zusätzliche Maßnahmen (zum Beispiel Chlorieren des Trinkwassers) beherrscht werden können. Da bei der erfindungsgemäßen Konstruktion eine vollständige Abdichtung zum Schiebergehäuse hin ermöglicht wird, gibt es keine Toträume, die zum Verkeimen führen könnten.

Die Erfindung wird im Weiteren anhand einer bevorzugten Ausführungsform näher erläutert. In den Figuren zeigen:
- Figur 1: einen erfindungsgemäßen Absperrschieber, teilweise in Schnittdarstellung,
- Figuren 2, 3 und 4: einen Längsschnitt, einen Querschnitt und eine perspektivische Ansicht einer erfindungsgemäßen Dichtung,
- Figur 5: einen Querschnitt der erfindungsgemäßen Dichtung mit angedeuteter, eingefahrener Dichtscheibe im Verschlusszustand, und
- Figuren 6 und 7: eine obere und eine geschnittene Seitenansicht zur Darstellung einer Haltevorrichtung für eine Dichtvorrichtung.

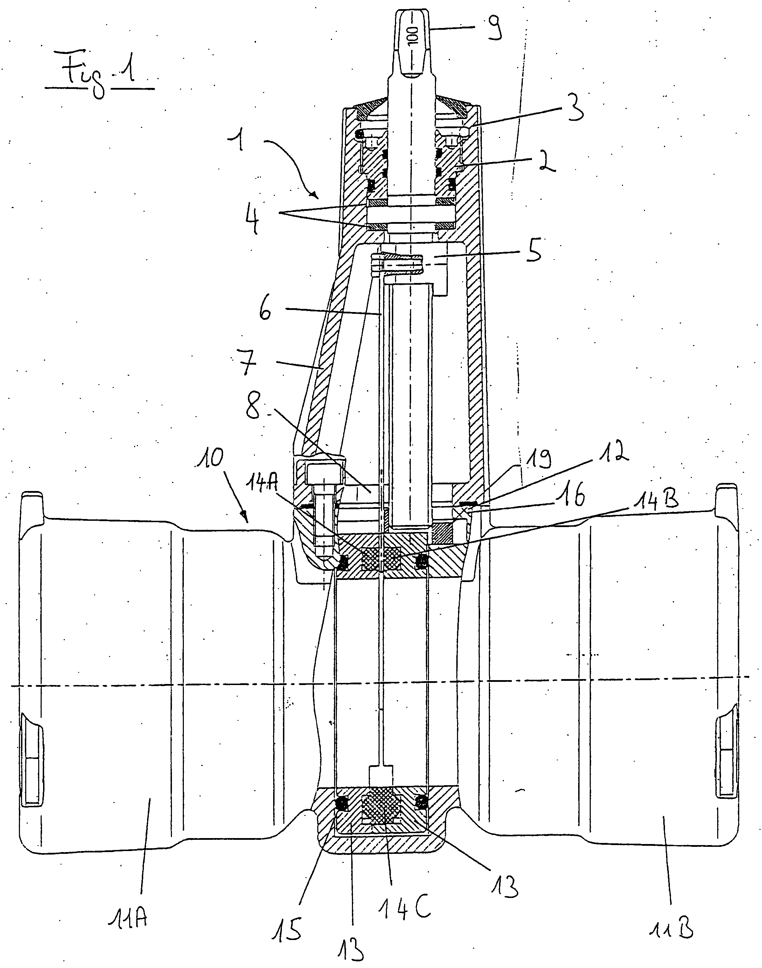

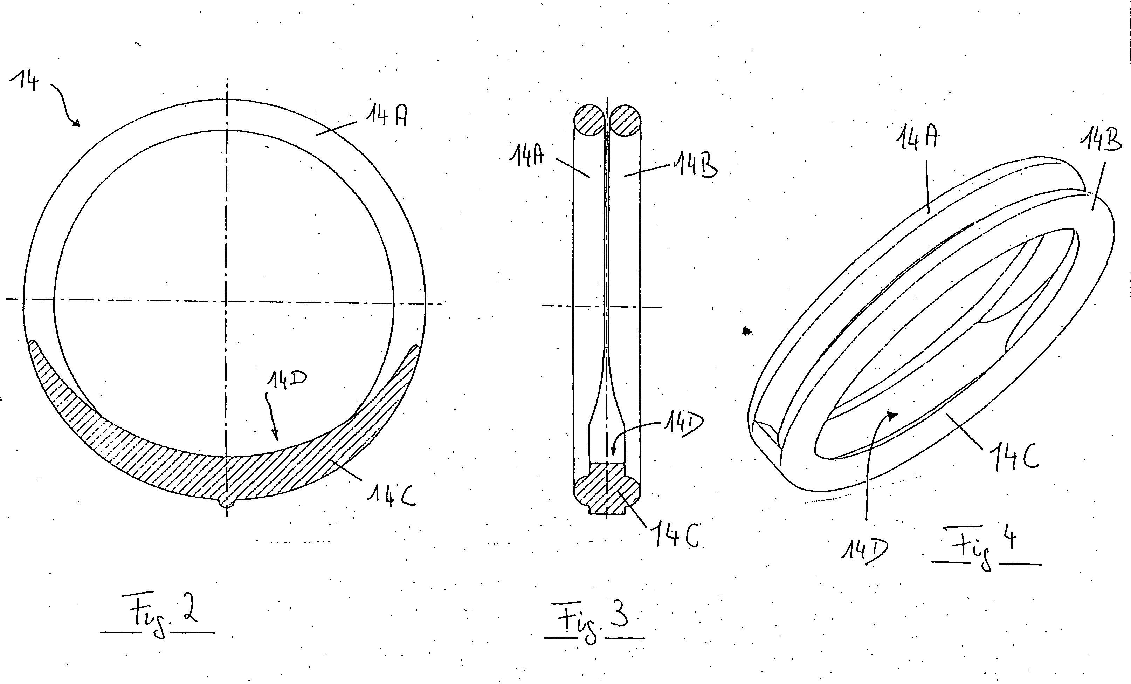

Die Figur 1 zeigt einen Absperrschieber, der erfindungsgemäß ausgestaltet ist, wobei der Bereich des Spindelgehäuses 1 und des Absperrgehäuseabschnittes 12 im Schnitt dargestellt ist. Wie schon oben bemerkt, weist der in der Zeichnung dargestellte Absperrschieber ein Spindelgehäuse 1 auf, an das sich unten ein Absperrgehäuseabschnitt 12 anschließt, der zu beiden Seiten hin integral mit Rohrleitungsabschnitten 11a und 11b versehen ist. Zusammen mit den Rohrleitungsabschnitten 11a und 11b bildet der Absperrgehäuseabschnitt 12 den Strömungsweg für das durchströmende Medium.

Die Spindel des-Absperrschiebers ist mit dem Bezugszeichen 9 bezeichnet. Sie ist im Lagerungs- und Abdichtungsabschnitt 3 des Spindelgehäuses 1 drehbar im Lager 4 gelagert und wird durch den O-Ring-Träger 2 axial abgedichtet.

Die Spindel erstreckt sich von ihrem oberen freien Ende nach unten, wobei sie in dem aus dem Abschnitt 3 nach unten herausragenden Bereich ihren Gewindeabschnitt aufweist, der sich durch die untere Öffnung 8 im Spindelgehäuse 1 hindurch bis in den nach oben offenen Kragen 16 des Absperrgehäuseabschnittes 12 hinein erstreckt.

In der dargestellten Ausführung ist der erfindungsgemäße Absperrschieber geöffnet. Die Spindelmutter 5, die sich durch eine Drehung der Spindel 9 längs am Gewindebereich der Spindel 9 entlang nach unten bewegen kann, ist in ihrer obersten Stellung und sie hält an ihrer linken Seite die Dichtscheibe 6, die in der Darstellung der Figur nur von der Seite her sichtbar ist. Das Spindelgehäuse 1 ist abdichtend oben auf dem Kragen 16 des Absperrgehäuseabschnittes 12 befestigt.

Im Absperrgehäuseabschnitt 12 sind zwei ringförmige Einsätze 13 so gelagert, dass sie axial von außen durch Ringvorsprünge des Absperrgehäuses 11 gehalten werden und an ihrer Innenseite aneinander abdichtend zusammen kommen.

Für die Abdichtung zum Absperrgehäuseabschnitt 12 hin sorgen die O-Ringe 15, während die einteilige Dichtung 14 zwischen den ringförmigen Einsätzen 13 abdichtet und zwar in jedwedem Zustand, d.h. bei zwischen die Einsätze eingefahrener Dichtscheibe 6 und auch bei ausgefahrener Dichtscheibe 6.

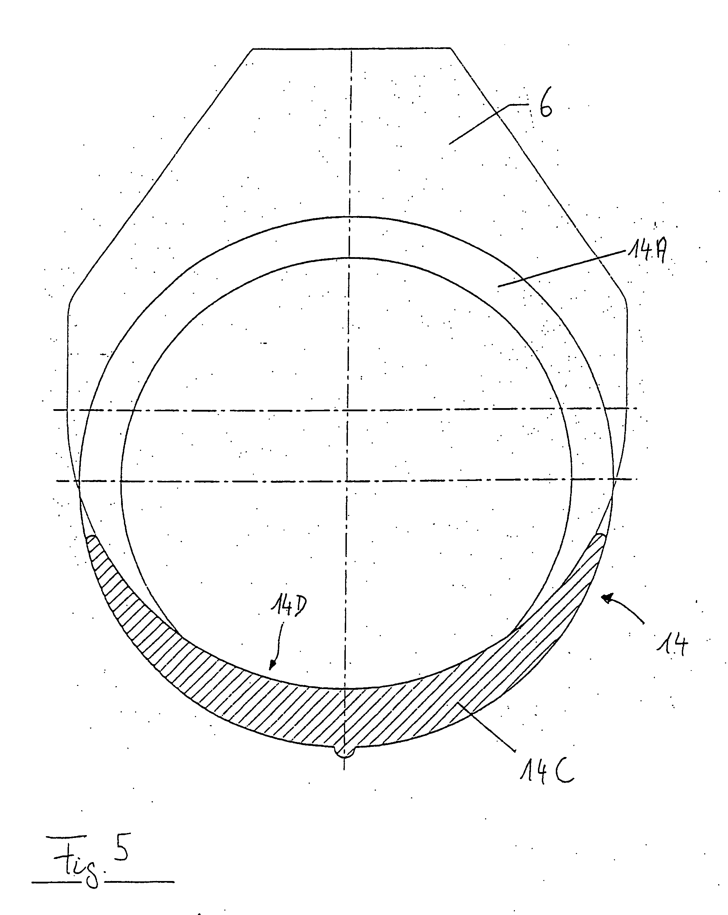

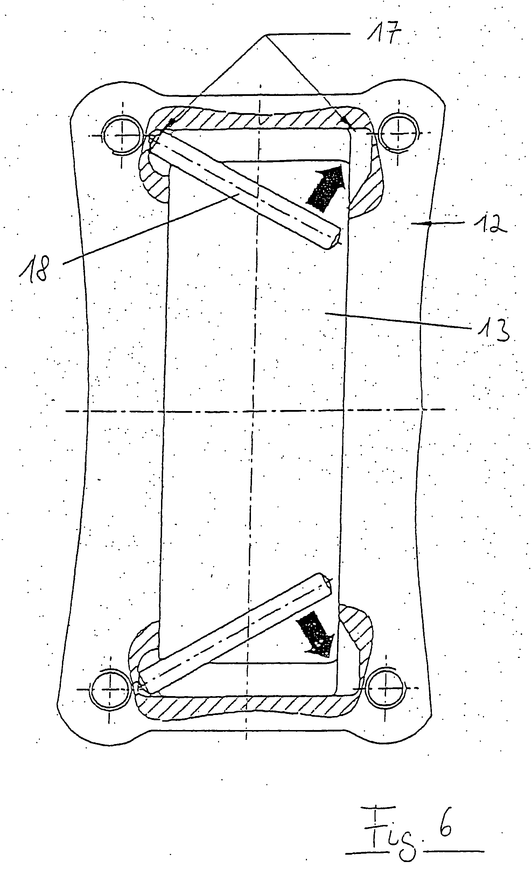

Die Dichtung 14 ist so aufgebaut, wie in den Figuren 2, 3 und 4 dargestellt. Die Figur 2 ist ein Längsschnitt durch die Dichtung, und zwar an der Mittellinie des in Figur 3 dargestellten Querschnittes. Eine perspektivische Ansicht ist in Figur 4 gezeigt.

Die Dichtung 14 weist im Oberteil zwei Ringdichtungsabschnitte 14A und 14B auf, zwischen die die Dichtscheibe 6 einfahren kann, wenn sie über die Spindelmutter 5 nach unten und zwischen die Einsätze 13 verfahren wird (siehe Figur 1). Im oberen Teil wirkt die Dichtung 14 deshalb als Umlaufdichtung.

Im unteren Drittel ist die Dichtung 14 allerdings dann als Stoßdichtung ausgeführt. Dort laufen die beiden Ringdichtungsabschnitte einteilig zu einem kompakten Unterteil 14C zusammen, das die beiden Ringdichtungsabschnitte 14A und 14B miteinander verbindet und an seiner oberen Oberfläche den Stoßdichtungsabschnitt 14D ausbildet.

In Figur 5 ist gezeigt, wie eine Abdichtung mit der erfindungsgemäßen Dichtung bewirkt wird. Dargestellt ist hier ein Querschnitt der erfindungsgemäßen Dichtung 14 mit angedeuteter, vollständig eingefahrener Dichtscheibe 6 im Verschlusszustand. Dabei dichtet die Innenfläche des dargestellten Ringdichtungsabschnittes 14A in der Art einer Umlaufdichtung ab; ebenso natürlich der in dieser Darstellung nicht sichtbare Ringdichtungsabschnitt 14B. Im unteren Drittel der Dichtung 14 geht das Dichtprinzip von einer Umlaufdichtung auf eine Stoßdichtung über, nämlich dort, wo die Unterkante der Dichtscheibe 6 flach an die obere Oberfläche des Unterteils 14C, also an den Stoßdichtungsabschnitt 14D anstößt. Weil die Dichtung aus einem flexiblen Material (Gummi) ausgebildet ist, kann die Dichtscheibe 6 an ihrer Unterkante ein wenig in das Dichtungsmaterial hineindrücken und so eine ausreichende Dichtigkeit sicherstellen.

Hier kommt auch die Funktion des in Figur 1 dargestellten Anschlages 19 für die Spindelmutter 5 zum Tragen. Dieser Anschlag 19 begrenzt nämlich die Abwärtsbewegung der Spindelmutter 5 und damit auch der Dichtscheibe 6 insoweit, dass sichergestellt ist, dass es an der Auf- bzw. Anlagelinie der Dichtscheiben-Unterkante zwar zu einer ausreichenden Abdichtung kommt, jedoch Beschädigungen der Dichtung an der Stoßfläche durch zu weites Herabfahren vermieden werden.

Durch die erfindungsgemäße Stoßdichtung im unteren Dichtungsabschnitt kann somit vermieden werden, dass Schmutzpartikel im unteren Teil der Dichtung dauerhaft eingefangen werden und über die Betriebsdauer zu Funktions- und Dichtigkeitsstörungen führen. Beim Schließvorgang eingeklemmte Fremdkörper (Gewebefetzen o. ä.) werden beim nächsten Öffnen des Schiebers wieder freigegeben.

Die Dichtvorrichtung, bestehend aus den Einsätzen 13, der Dichtung 14 und den O-Ringen 15, sorgt in jedem Fall dafür, dass kein strömendes Medium aus dem vom Absperrgehäuseabschnitt 12 umgebenden Bereich in das Innere des Kragens 16 oder in den unteren Gehäuseabschnitt 7 des Spindelgehäuses 1 eindringen kann, so dass die Spindel 9 in ihrem Gewindebereich zu jedem Zeitpunkt vor Verschmutzung geschützt ist, wodurch sich die hohe Betriebssicherheit ergibt.

Zum Absperren des dargestellten Schiebers wird die Spindel 9 so gedreht, dass die Spindelmutter 5 sich entlang des Gewindeabschnittes nach unten bewegt, wodurch sich die Dichtscheibe 6 zwischen den Einsätzen 13 bzw. der Dichtung 14 nach unten schiebt, bis sie so zwischen den Einsätzen 13 liegt, dass die Dichtung 14 oben umlaufend und unten im Stoß abdichtet. Die Strömung wird dann völlig angehalten und wegen der Konstruktion der Dichtvorrichtung entstehen keinerlei Toträume, wie sie beispielsweise bei herkömmlichen Absperrschiebern mit zur Spindel hin offenen Schieberkeilen vorkommen.

Auch beim Öffnen des Absperrschiebers durch eine entgegengesetzte Drehung der Spindel 9 kann das Eindringen von Verschmutzungen in den Hohlraum um den Gewindeabschnitt der Spindel 9 herum vermieden werden, da solche Verschmutzungen beim Hochfahren an den Innenkanten der Einsätze 13 abgestreift werden.

Mit dem Bezugszeichen 10 ist in der Figur 1 der Druckteil des Absperrschiebers bezeichnet, der aus den Rohrleitungsabschnitten 11a, 11b und dem nach innen gerichteten Abschnitt des Absperrgehäuseabschnittes 12 sowie den Einsätzen 13 mit der Dichtung 14 und den O-Ringen 15 besteht.

Von diesem Druckteil kann das Spindelgehäuse in jedwedem Betriebszustand abmontiert werden und zwar wegen der andauernd vorhandenen Dichtfunktion der Dichtvorrichtung 13, 14, 15. Dies gestattet nunmehr ein vollständiges Abnehmen des Spindelgehäuses 1 mitsamt Spindel 9 und Dichtscheibe 6 auch im Druckbetrieb bei offenem Strömungsweg, wodurch Wartungsarbeiten ausgesprochen erleichtert werden. Fast ebenso einfach lässt sich das Spindelgehäuse auch bei eingefahrener Dichtscheibe 6 zu Wartungszwecken abnehmen, wenn die Spindel 5 aus der Spindelmutter 9 herausgedreht wird, so dass die Dichtscheibe 6 zusammen mit der Spindelmutter 5 im eingefahrenen Zustand im Absperrgehäuseabschnitt 12 verbleibt.

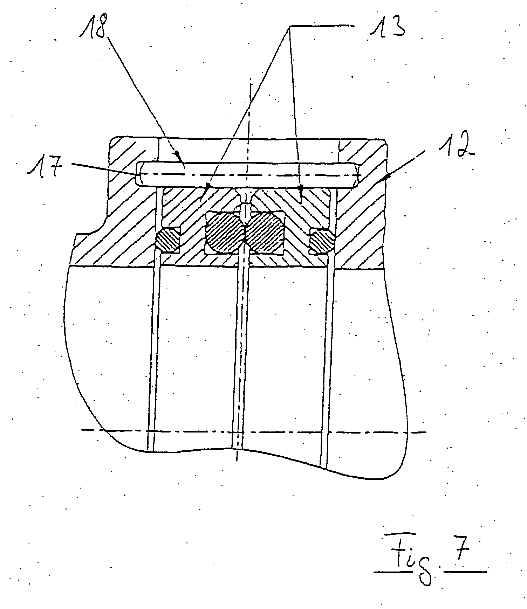

Die Figuren 6 und 7 zeigen die Befestigung der Dichtvorrichtung, insbesondere der Einsätze 13 im Absperrgehäuseabschnitt 12. Die Figur 6 ist dabei eine Ansicht von oben auf den Gehäuseabschnitt 12 und die Figur 7 zeigt einen Schnitt in der Ebene eines Halteclips aus derselben Perspektive wie die Figur 1.

In Figur 6 wird ersichtlich, dass die Einsätze 13 von oben durch Halteclips 18 befestigt werden, die beidseitig in Aussparungen 17 im Gehäuse eingreifen. Die Figur 7 zeigt diese Halterung, wobei ersichtlich wird, dass die Halteclips 18 von oben die Einsätze 13 übergreifen und damit verhindern, dass diese nach oben ausrutschen können. Eingebracht werden die Halteclips 18 so, wie dies durch die Pfeile in Figur 6 dargestellt, und die Aussparungen 17 sind an der Seite, wo die Halteclips 18 eingedrückt werden, so ausgefräst, dass die Clips 18 beidseitig am Gehäuse in die Aussparungen 17 eingedrückt werden können und sich durch die eigene Vorspannung so verkeilen, dass sie nur mittels eines Werkzeugs wieder entfernt werden können. Die Clips sind vorzugsweise aus Kunststoff hergestellt, um eine gewisse Verbiegung beim Eindrücken mitmachen zu können und dann die vorgenannte Verkeilung zu gestatten.

Ersichtlich wird in Figur 6 außerdem, dass die Kunststoffclips 18 die Einsätze 13 ganz außen am Gehäuse halten, so dass sie das Einbringen und das Herausziehen der Dichtscheibe nicht behindern. Die Hauptfunktion der Halteclips 18 besteht in der Fixierung der Einsätze 13 in ihrer Arbeitsposition; sie werden dort in ihrer Lage sicher fixiert und können auch nach dem Abnehmen des Spindelgehäuses unter Druck nicht aus dem Gehäuse herausrutschen.

## Patentansprüche

1. Absperrschieber für Druckrohrleitungen mit einer Spindel (9), mittels der eine Dichtscheibe (6) in einen Absperrgehäuseabschnitt (12) des Schiebers in den Strömungsweg eingefahren wird, wobei der Absperrgehäuseabschnitt (12) eine den Strömungsweg abdichtende Dichtvorrichtung (13, 14, 15) aufweist, welche die Dichtscheibe (6), wenn sie in den Strömungsweg eingefahren ist, mindestens teilweise beidseitig umlaufend abdichtet, wobei die Dichtvorrichtung (13, 14, 15) eine Dichtung (14) aufweist, deren Oberteil aus zwei Ringdichtungsabschnitten (14A, 14B) besteht und an deren Unterteil die beiden Ringdichtungsabschnitte (14A, 14B) zu einem gemeinsamen Auf- bzw. Anlageabschnitt (14C) für den unteren Abschnitt der Dichtscheibe (6) zusammenlaufen, **dadurch gekennzeichnet, dass** die Dichtung (14) insgesamt einteilig aufgebaut ist.

2. Absperrschieber nach Anspruch 1, **dadurch gekennzeichnet, dass** das Oberteil der Dichtung mit den Ringdichtungsabschnitten (14A, 14B) etwa zwei Drittel der vertikalen Länge und das Unterteil mit dem Auf- bzw. Anlageabschnitt (14C) etwa ein Drittel der vertikalen Länge der Dichtung einnimmt.

3. Absperrschieber nach einem der Ansprüche 1 oder 2, **dadurch gekennzeichnet, dass** die Dichtvorrichtung (13, 14, 15) zwei aneinanderliegende und aneinander abdichtende, ringförmige Einsätze (13) aufweist, die im Absperrgehäuseabschnitt (12) gehalten werden, wobei die Dichtscheibe (6) zwischen den Einsätzen (13) in den Strömungsweg eingefahren wird.

4. Absperrschieber nach Anspruch 3, **dadurch gekennzeichnet, dass** die Einsätze (13) an der Kontaktfläche zum Absperrgehäuseabschnitt (12) mit Ringdichtungen (15) abgedichtet sind.

5. Absperrschieber nach Anspruch 4, **dadurch gekennzeichnet, dass** die Ringdichtungen, insbesondere O-Ringe, in Aufnahmen der Einsätze gelagert sind.

6. Absperrschieber nach Anspruch 4 oder Anspruch 5, **dadurch gekennzeichnet, dass** die Einsätze im unteren Bereich Ausnehmungen zur Aufnahme des Auf- bzw. Anlageabschnittes (14C) aufweisen.

7. Absperrschieber nach einem der Ansprüche 1 bis 6, **dadurch gekennzeichnet, dass** die Spindel (9) sich von einer oberen, abgedichteten Lagerstelle (4) im Spindelgehäuse (1) durch eine untere Öffnung (8) im Spindelgehäuse (1) in den Absperrgehäuseabschnitt (12) hinein bis knapp über die Dichtvorrichtung (13, 14, 15) erstreckt.

8. Absperrschieber nach Anspruch 7, **dadurch gekennzeichnet, dass** im Absperrgehäuseabschnitt (12) ein Anschlag (19) für die Spindelmutter (5) vorgesehen ist.

9. Absperrschieber nach einem der Ansprüche 1 bis 8, **dadurch gekennzeichnet, dass** der Absperrgehäuseabschnitt (12) im Einfahrbereich der Dichtscheibe (6) eine lösbare und abdichtbare Verbindung zum Spindelgehäuse (1) aufweist, insbesondere in Form eines zum Spindelgehäuse (1) hin offenen Kragens (16).

10. Absperrschieber nach einem der Ansprüche 1 bis 9, **dadurch gekennzeichnet, dass** sich von dem Absperrgehäuseabschnitt (12) weg beidseitig integral verbundene Rohrleitungsabschnitte (11A, 11B) erstrecken, die mit dem Absperrgehäuseabschnitt (12) zusammen den Strömungsweg im Bereich des Schiebers ausbilden, wobei sie an ihren abragenden Enden Verbindungsmittel, insbesondere Bajonettanschlüsse zur Rohranbindung aufweisen.

11. Absperrschieber nach einem der Ansprüche 1 bis 10, **dadurch gekennzeichnet, dass** die Dichtvorrichtung (13, 14, 15) durch eine Haltevorrichtung im Absperrgehäuseabschnitt (12) befestigt ist, insbesondere durch beidseitig in Aussparungen des Gehäuses (12) eingreifende und die Oberseite der Dichtvorrichtung (13, 14, 15) übergreifende Halteclips.

12. Dichtung (14) für einen Absperrschieber, dessen Strömungsweg durch eine Dichtscheibe (6) abgedichtet wird, wenn sie in den Strömungsweg eingefahren ist, wobei die Dichtung (14) ein Oberteil aus zwei Ringdichtungsabschnitten (14A, 14B) und ein Unterteil aufweist, an dem die beiden Ringdichtungsabschnitte (14A, 14B) zu einem gemeinsamen Auf- bzw. Anlageabschnitt (14C) für den unteren Abschnitt der Dichtscheibe (6) zusammenlaufen, **dadurch gekennzeichnet, dass** sie insgesamt einteilig aufgebaut ist.

13. Dichtung nach Anspruch 12, **dadurch gekennzeichnet, dass** das Oberteil der Dichtung mit den Ringdichtungsabschnitten (14A, 14B) etwa zwei Drittel der vertikalen Länge und das Unterteil mit dem Auf- bzw. Anlageabschnitt (14C) etwa ein Drittel der vertikalen Länge der Dichtung einnimmt.

14. Verwendung eines Absperrschiebers nach einem der Ansprüche 1 bis 11 als Absperrschieber für Abwasserrohrleitungen.

15. Verwendung eines Absperrschiebers nach einem der Ansprüche 1 bis 11 als Absperrschieber für Rohrleitungen für flüssige oder gasförmige, brennbare Medien.

16. Verwendung eines Absperrschiebers nach einem der Ansprüche 1 bis 11 als Absperrschieber für Wasserrohrleitungen, insbesondere Trinkwasserrohrleitungen.

## Claims

1. A cut-off valve for pressure pipe lines comprising a spindle (9) by means of which a gasket (6) is inserted into the flow path in a cut-off casing section (12) of the valve, wherein the cut-off casing section (12) comprises a sealing device (13, 14, 15) which seals off the flow path and which the gasket (6), when it is inserted into the flow path, at least partially circumferentially seals off on both sides, wherein the sealing device (13, 14, 15) comprises a seal (14), the upper portion of which consists of two annular sealing sections (14A, 14B), and on the lower portion of which the two annular sealing sections (14A, 14B) converge into a common bearing and supporting section (14C) for the lower section of the gasket (6), **characterised in that** the seal (14) as a whole is formed integrally.

2. The cut-off valve as set forth in claim 1, **characterised in that** the upper portion of the seal comprising the annular sealing sections (14A, 14B) takes up about two thirds of the vertical length of the seal, and the lower portion comprising the bearing and supporting section (14C) takes up about one third of the vertical length of the seal.

3. The cut-off valve as set forth in any one of claims 1 or 2, **characterised in that** the sealing device (13, 14, 15) comprises two abutting and mutually sealing annular inserts (13) which are held in the cut-off casing section (12), wherein the gasket (6) is inserted into the flow path between the inserts (13).

4. The cut-off valve as set forth in claim 3, **characterised in that** the inserts (13) are sealed off by annular seals (15) on the contact area to the cut-off casing section (12).

5. The cut-off valve as set forth in claim 4, **characterised in that** the annular seals - in particular, O rings - are supported in recesses in the inserts.

6. The cut-off valve as set forth in claim 4 or 5, **characterised in that** the inserts comprise cavities in their lower region, for receiving the bearing and supporting section (14C).

7. The cut-off valve as set forth in any one of claims 1 to 6, **characterised in that** the spindle (9) extends from an upper sealed bearing point (4) in the spindle casing (1), through a lower opening (8) in the spindle casing (1), into the cut-off casing section (12) up until just over the sealing device (13, 14, 15).

8. The cut-off valve as set forth in claim 7, **characterised in that** a stopper (19) for the spindle nut (5) is provided in the cut-off casing section (12).

9. The cut-off valve as set forth in any one of claims 1 to 8, **characterised in that** the cut-off casing section (12) comprises a releasable and sealable connection to the spindle casing (1) in the inserting region of the gasket (6), in particular in the form of a collar (16) which opens towards the spindle casing (1).

10. The cut-off valve as set forth in any one of claims 1 to 9, **characterised in that** integrally connected pipe line sections (11A, 11B) extend away from the cut-off casing section (12) on both sides and together with the cut-off casing section (12) form the flow path in the region of the valve, wherein they comprise connecting means, in particular bayonet connectors for attaching pipes, at their projecting ends.

11. The cut-off valve as set forth in any one of claims 1 to 10, **characterised in that** the sealing device (13, 14, 15) is fastened by a holding device in the cut-off casing section (12), in particular by holding clips which engage on both sides with cavities in the casing (12) and overlap the upper side of the sealing device (13, 14, 15).

12. A seal (14) for a cut-off valve in which the flow path is sealed off by a gasket (6) when it is inserted into the flow path, wherein the seal (14) comprises an upper portion consisting of two annular sealing sections (14A, 14B), and a lower portion on which the two annular sealing sections (14A, 14B) converge into a common bearing and supporting section (14C) for the lower section of the gasket (6), **characterised in that** the seal (14) as a whole is formed integrally.

13. The seal as set forth in claim 12, **characterised in that** the upper portion of the seal comprising the annular sealing sections (14A, 14B) takes up about two thirds of the vertical length of the seal, and the lower portion comprising the bearing and supporting section (14C) takes up about one third of the vertical length of the seal.

14. The use of a cut-off valve as set forth in any one of claims 1 to 11 as a cut-off valve for sewerage pipe lines.

15. The use of a cut-off valve as set forth in any one of claims 1 to 11 as a cut-off valve for pipe lines for liquid or gaseous combustible media.

16. The use of a cut-off valve as set forth in any one of claims 1 to 11 as a cut-off valve for water pipe lines, in particular drinking water pipe lines.

## Revendications

1. Robinet-vanne pour conduites sous pression avec une broche (9), à l'aide de laquelle un opercule (6) est introduit dans le chemin d'écoulement dans une section de corps de fermeture (12) du robinet-vanne, la section de corps de fermeture (12) présentant un dispositif d'étanchéité (13, 14, 15) étanchant le chemin d'écoulement, lequel étanche l'opercule (6) de manière périphérique au moins partiellement des deux côtés lorsque celui-ci est introduit dans le chemin d'écoulement, le dispositif d'étanchéité (13, 14, 15) présentant un joint d'étanchéité (14) dont la partie supérieure est constituée de deux sections d'étanchéité annulaires (14A, 14B) et les deux sections d'étanchéité annulaires se rejoignant à leur partie inférieure en une section commune d'appui et de contact (14C) pour la section inférieure de l'opercule (6), **caractérisé en ce que** le joint d'étanchéité (14) est globalement construit en une pièce.

2. Robinet-vanne suivant la revendication 1, **caractérisé en ce que** la partie supérieure du joint d'étanchéité occupe avec les sections d'étanchéité annulaires (14A, 14B) environ deux tiers de la longueur verticale et la partie inférieure avec la section d'appui et de contact (14C) occupe environ un tiers de la longueur verticale du joint d'étanchéité.

3. Robinet-vanne suivant l'une des revendications 1 ou 2, **caractérisé en ce que** le dispositif d'étanchéité (13, 14, 15) présente deux éléments annulaires (13) adjacents et faisant étanchéité l'un contre l'autre qui sont maintenus dans la section de corps de fermeture (12), l'opercule (6) étant introduit entre les éléments (13) dans le chemin d'écoulement.

4. Robinet-vanne suivant la revendication 3, **caractérisé en ce que** les éléments (13) sont étanchés à la surface de contact avec la section de corps de fermeture (12) à l'aide de joints d'étanchéité annulaires (15).

5. Robinet-vanne suivant la revendication 4, **caractérisé en ce que** les joints d'étanchéité annulaires, en particulier des joints toriques, reposent dans des logements des éléments.

6. Robinet-vanne suivant la revendication 4 ou la revendication 5, **caractérisé en ce que** les éléments présentent à la partie inférieure des renfoncements pour accueillir la section d'appui et de contact (14C).

7. Robinet-vanne suivant l'une des revendications 1 à 6, **caractérisé en ce que** la broche (9) s'étend d'un palier supérieur (4) étanché dans le logement de la broche (1), à travers une ouverture inférieure (8) dans le logement de la broche (1), dans la section de corps de fermeture (12) jusqu'à peu au-dessus du dispositif d'étanchéité (13, 14, 15).

8. Robinet-vanne suivant la revendication 7, **caractérisé en ce qu'**une butée (19) est prévue dans la section de corps de fermeture (12) pour l'écrou de broche (5).

9. Robinet-vanne suivant l'une des revendications 1 à 8, **caractérisé en ce que** la section de corps de fermeture (12) présente dans la zone de pénétration de l'opercule (6) une liaison mobile et pouvant être étanchée au logement de la broche (1), en particulier sous la forme d'un rebord (16) ouvert en direction du logement de la broche (1).

10. Robinet-vanne suivant l'une des revendications 1 à 9, **caractérisé en ce que** des tronçons de tuyauteries (11A, 11B) intégralement reliés s'étendent des deux côtés de la section de corps de fermeture (12), lesquels forment avec le corps de fermeture (12) le chemin d'écoulement dans la zone du robinet-vanne, tout en présentant à leurs extrémités qui dépassent des moyens de liaison, en particulier des raccords à baïonnette pour la liaison à la tuyauterie.

11. Robinet-vanne suivant l'une des revendications 1 à 10, **caractérisé en ce que** le dispositif d'étanchéité (13, 14, 15) est fixé par un dispositif de retenue dans la section de corps de fermeture (12), en particulier à l'aide de clips de retenue faisant prise des deux côtés dans des renfoncements du corps (12) et recouvrant la face supérieure du dispositif d'étanchéité (13, 14, 15).

12. Joint d'étanchéité (14) pour un robinet-vanne dont le chemin d'écoulement est étanché par un opercule (6) lorsque celui-ci est introduit dans le chemin d'écoulement, le joint d'étanchéité (14) présentant une partie supérieure constituée de deux sections d'étanchéité annulaires (14A, 14B) et une partie inférieure à laquelle les deux sections d'étanchéité annulaires (14A, 14B) se réunissent en une section d'appui et de contact (14C) pour la section inférieure de l'opercule (6), **caractérisé en ce qu'**il est globalement construit en une pièce.

13. Joint d'étanchéité suivant la revendication 12, **caractérisé en ce que** la partie supérieure du joint d'étanchéité occupe avec les sections d'étanchéité annulaires (14A, 14B) environ deux tiers de la longueur verticale et la partie inférieure avec la section d'appui et de contact (14C) occupe environ un tiers de la longueur verticale du joint d'étanchéité.

14. Utilisation d'un robinet-vanne suivant l'une des revendications 1 à 11 comme robinet-vanne pour des tuyauteries d'eaux usées.

15. Utilisation d'un robinet-vanne suivant l'une des revendications 1 à 11 comme robinet-vanne pour fluides inflammables liquides ou gazeux.

16. Utilisation d'un robinet-vanne suivant l'une des revendications 1 à 11 comme robinet-vanne pour des tuyauteries d'eau, en particulier des tuyauteries d'eau potable.
